Europäisches Patentamt

European Patent Office

Office européen des brevets

(11) Numéro de publication: **0 015 630**
**A1**

## DEMANDE DE BREVET EUROPEEN

(21) Numéro de dépôt: **80200217.0**

(22) Date de dépôt: **07.03.80**

(51) Int. Cl.³: **G 03 B 17/26**

(30) Priorité: **09.03.79 FR 7906108**

(43) Date de publication de la demande: **17.09.80**
**Bulletin 80/19**

(84) Etats contractants désignés: **CH DE FR GB IT NL**

(71) Demandeur: **SOCIETE D'OPTIQUE, DE MECANIQUE D'ELECTRICITE ET DE RADIO O.M.E.R.A. - S.E.G.I.D., 49, rue Ferdinand Berthoud, F-95100 Argenteuil (FR)**

(84) Etats contractants désignés: **FR**

(71) Demandeur: **N.V. Philips' Gloeilampenfabrieken, Pieter Zeemanstraat 6, NL-5621 CT Eindhoven (NL)**

(84) Etats contractants désignés: **CH DE GB IT NL**

(72) Inventeur: **Lamoine, Pierre Roger, Societe Civile S-P-I-D- 209 rue de l'Université, F-75007 Paris (FR)**

(74) Mandataire: **Pyronnet, Jacques et al, Société Civile S.P.I.D. 209 rue de l'Université, F-75007 Paris (FR)**

(54) **Mécanisme de verrouillage de sécurité pour magasin de caméra, et caméra et/ou magasin incorporant un tel mécanisme.**

(57) Ce mécanisme est utilisable notamment pour une caméra disposée dans le poste de pilotage d'un aéronef pouvant être soumis à des accélérations de l'ordre de 10 g et le magasin doit pouvoir être remplacé par le pilote en cours de vol. Pour une fixation très ferme entre le magasin (2) et le corps (1) de la caméra ce mécanisme comporte en premier lieu deux points (13, 14) de fixation par pied de centrage coopérant avec un alésage précis et un troisième point de fixation constitué par un verrou (24) articulé sur le corps, travaillant contre l'action d'un ressort et coopérant avec un chanfrein (21) d'introduction et un chanfrein (22) de blocage, ces deux chanfreins étant juxtaposés dans l'épaisseur de la paroi inférieure du magasin. D'autre part, une came (27) quart de tour solidaire du corps agit contre le verrou pour assurer le verrouillage de sécurité.

Application à un enregistreur de visée pour avion de chasse.

1

# MECANISME DE VERROUILLAGE DE SECURITE POUR MAGASIN DE CAMERA,ET CAMERA ET/OU MAGASIN INCORPORANT UN TEL MECANISME.

L'invention concerne un mécanisme de verrouillage de sécurité pour magasin de caméra, notamment une caméra disposée dans le poste de pilotage d'un aéronef pouvant être soumis à des accélérations de l'ordre de 10 g, ledit magasin étant séparable du corps de la caméra.

Plus particulièrement, l'invention s'applique à un enregistreur de visée disposé dans le cockpit d'un avion de chasse dans lequel le fonctionnement de la caméra est commandé par le levier de déclenchement des armes. Le recul des armes au moment du tir peut provoquer sur la structure de l'appareil des variations très rapides d'accélération pouvant atteindre 10 g, g désignant l'accélération de la pesanteur, surtout dans la direction de vol désignée par la suite par direction longitudinale.

A cause de ces vibrations très violentes la stabilité du magasin portant le film à impressionner doit être très bonne par rapport au corps de la caméra, si l'on veut éviter qu'à la suite de violentes secousses pendant la prise de vues, un déplacement relatif entre le film et le corps de la caméra ne rende floues les vues enregistrées.

Ce problème technique est résolu, dans la technique connue par le fait que le magasin fait partie intégrante du corps de la caméra. Une telle disposition présente deux inconvénients : le remplacement du film impressionné par un film vierge se fait ordinairement lorsque l'aéronef est à l'arrêt et de plus nécessite le démontage de la caméra elle-même ce qui l'expose à des chocs pendant sa manutention et son transport entre l'aéronef et le lieu de rechargement. En outre, lorsqu'une telle caméra munie d'un film vierge est remontée dans le cockpit

0015630

d'un avion de chasse, il n'est pas possible au pilote de remplacer en cours de vol le film impressionné étant donné qu'il ne dispose que de sa main gauche pour effectuer cette manoeuvre. Les prises de vues sont donc limitées, au cours d'un raid à la seule capacité d'un film.

On connaît un mécanisme de verrouillage de sécurité pour chargeur de caméra du type défini en préambule, du certificat d'utilité n° 2 269 844. Il s'agit d'une caméra de mesures pour essais en vol fixée sur l'appareil. Le mécanisme de verrouillage décrit dans ce document est complexe et comporte plusieurs dizaines de pièces dont certaines sont difficiles à réaliser, parmi lesquelles un dispositif de centrage par rainure creuse et baguette, ainsi qu'un mécanisme de blocage comportant un bouton mobile verticalement ainsi que deux verrous à déplacements latéraux.

L'invention se propose de réaliser un mécanisme de verrouillage de sécurité pour magasin de caméra qui soit simple à mettre en oeuvre et qui puisse supporter des variations rapides d'accélération de l'ordre de 10 g, avec un déplacement maximal entre le magasin et le corps de la caméra de quelques centièmes de millimètres. Le mécanisme de verrouillage de sécurité défini en préambule est remarquable en ce qu'il permet, de façon simple, le remplacement en cours de vol par le pilote d'un magasin utilisé par un magasin vierge et comporte à cet effet trois points de fixation dudit magasin audit corps dont au moins un premier, d'un premier type, est constitué par l'association d'un pied de centrage et d'un alésage précis et au moins un second, d'un deuxième type, est constitué par un verrou articulé sur ledit corps, qui travaille contre l'action d'un premier ressort et coopère avec deux chanfreins juxtaposés disposés extérieurement dans la paroi externe dudit magasin, à savoir un chanfrein d'introduction et un chanfrein de blocage, une came solidaire dudit corps servant, après mise en place du magasin, à faire appuyer à force ledit verrou contre ledit chanfrein de blocage selon un vecteur force qui s'écarte du plan passant par les trois points de fixation en direction du corps de la caméra, de façon à réaliser ledit verrouillage de sécurité.

De préférence le magasin a la forme d'un parallélépipède rectangle et s'applique contre la caméra par une face inférieure et une face avant de façon qu'après sa mise en place, caméra et magasin forment un ensemble compact.

Selon un premier mode de réalisation la face avant du magasin est solidarisée au corps de la caméra au moyen de deux points de fixation dudit premier type, à pied de centrage et alésage, alors que sa face inférieure est solidarisée audit corps au moyen d'un point de fixation dudit deuxième type, à verrou et chanfreins d'introduction et de blocage.

Selon un deuxième mode de réalisation, cette fixation triangulaire est inversée, la face avant du magasin étant solidarisée audit corps au moyen d'un seul point de fixation dudit premier type, alors que sa face inférieure est solidarisée au corps au moyen de deux points de fixation dudit deuxième type.

La description suivante en regard des dessins annexés, le tout donné à titre d'exemple fera bien comprendre comment l'invention peut être réalisée.

Les figures 1a et 1b représentent en perspective respectivement le corps et le magasin de la caméra incorporant le mécanisme de verrouillage de sécurité selon l'invention.

La figure 2 représente, selon la coupe II-II de la figure 3, soit en vue latérale, le début de la mise en place du magasin contre le corps de la caméra.

La figure 3 représente en vue longitudinale la face arrière du magasin et du corps de la caméra, lors de la fin de la mise en place du magasin contre le corps.

La figure 4 représente la même vue qu'à la figure 3 après actionnement du verrou de sécurité.

La figure 5 représente un mode de fixation d'une languette supportant un pied de centrage ou un alésage précis avec lequel il coopère.

La figure 6 représente un mode de fixation de la plaquette d'appui comportant les chanfreins d'introduction et de blocage.

La figure 7 illustre, selon la coupe II-II de la figure 3, le mode de réalisation de l'invention décrit en référence aux figures 1 à 6, dans lequel est prévu en outre un mécanisme d'éjection du magasin, avant éjection.

La figure 8 illustre, selon la coupe VIII-VIII de la figure 3, le mode de réalisation perfectionné de la figure 7, pendant l'éjection du magasin.

La figure 9 illustre, par une vue longitudinale de la face arrière du magasin et du corps de la caméra, un deuxième mode de réalisation de l'invention.

Sur toutes les figures les mêmes références désignent les mêmes éléments avec les mêmes fonctions.

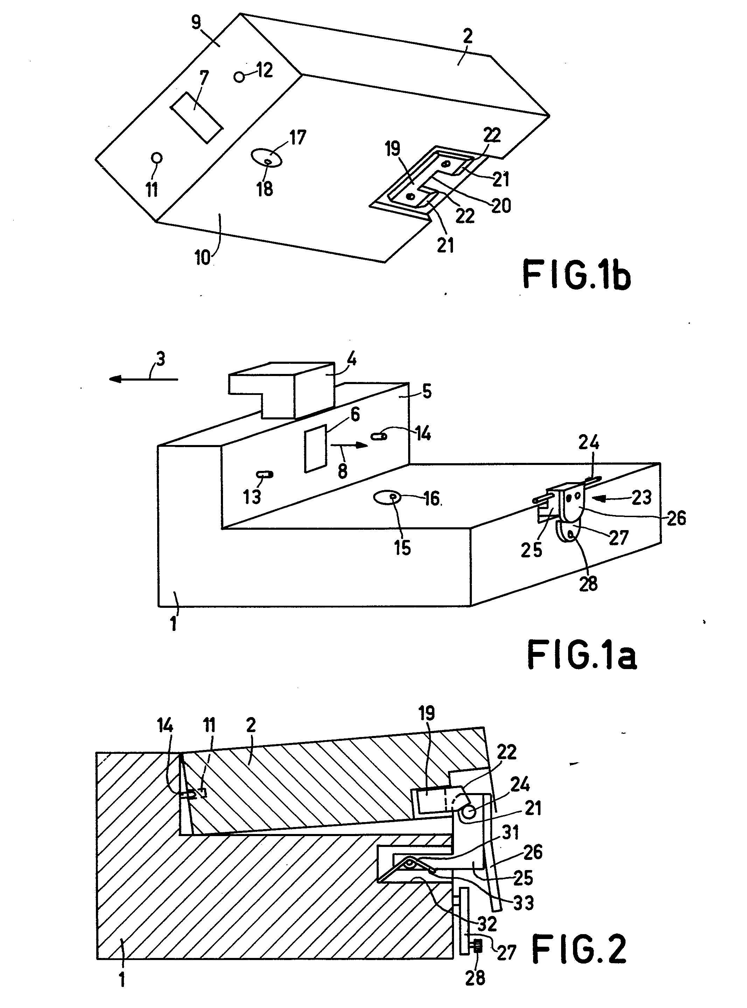

Sur la figure 1a la référence 1 désigne le corps d'une caméra, de préférence un enregistreur de visée destiné à être monté dans le cockpit d'un avion de chasse. Ce corps présente une échancrure destinée à recevoir un magasin 2 comportant le film à impressionner et représenté à la figure 1b. Le magasin est de forme sensiblement parallélépipédique et l'ensemble corps-magasin est conçu de façon telle qu'après solidarisation, il revête aussi sensiblement la forme d'un parallélépipède. Sur la figure 1a la flèche 3 indique la direction de visée, dite direction longitudinale et que l'on considèrera dans la suite de la description comme étant sensiblement horizontale. Le corps 1 comporte, de façon connue un dispositif optique 4 à lentilles et à prismes, ce dispositif étant complété, à l'intérieur de la partie supérieure 5 du corps par un prisme, un miroir et, par exemple, un boisseau obturateur tournant autour d'un axe vertical. Les faisceaux lumineux constituant l'image à enregistrer frappent le film après avoir traversé les ouvertures 6 pratiquées dans le corps et 7 dans le magasin, en suivant la direction longitudinale indiquée par la flèche 8 (figure 1a). Le magasin comporte une face avant 9 et une face inférieure 10. En plus de l'ouverture 7, la face avant du magasin comporte deux alésages 11 et 12 situés près des bords latéraux et destinés à coopérer avec deux pieds de centrage 13 et 14 situés en regard dans le corps de la caméra, lors de la mise en place, de façon à constituer deux points de fixation d'un premier type. Les pieds de centrage 13 et 14 peuvent aussi appartenir au magasin, les alésages 11 et 12 appartenant au corps. Cependant la variante préférée est celle qui est représentée à la figure 1. L'entraînement du film a lieu de façon connue par griffe et contregriffe grâce à un mécanisme disposé entièrement dans le magasin et entraîné à partir d'un mécanisme moteur disposé dans le corps, la transmission de mouvement entre corps et magasin se faisant à l'aide d'une manivelle motrice 15 dotée d'un picot rétractable 16 (figure 1a) coopérant avec une manivelle entraînée 17 munie d'une ouverture 18 disposée en regard à fleur de la face inférieure du magasin. Ce mécanisme d'entraînement est synchronisé, à l'intérieur du corps, avec le mécanisme d'entraînement du boisseau obturateur. La face inférieure du magasin comporte, à proximité de la face arrière, sensiblement en son milieu, une plaquette d'appui 19 munie d'une échancrure centrale 20 et dont les bords libres sont constitués de deux chanfreins juxtaposés qui s'étendent selon une direction transversale et parmi lesquels le chanfrein d'introduction 21 est visible, le chanfrein de blocage 22 étant caché. Cette plaquette d'appui coopère avec un dispositif de verrouillage appartenant à la face arrière du corps et désigné par la référence globale 23. Le dispositif 23 coopère avec la plaquette d'appui 19 de façon à constituer un troisième point de fixation, d'un deuxième type. Il comporte un verrou 24 constitué par une tige cylindrique emmanchée à force à travers une chape support 25 elle-même articulée autour d'un axe transversal à l'intérieur du corps. Eventuellement, un levier de déverrouillage 26 est fixé contre la chape. Une came 27 articulée autour d'un axe longitudinal solidaire du corps et manoeuvrée par un bouton 28 assure le verrouillage de sécurité après mise en place du magasin.

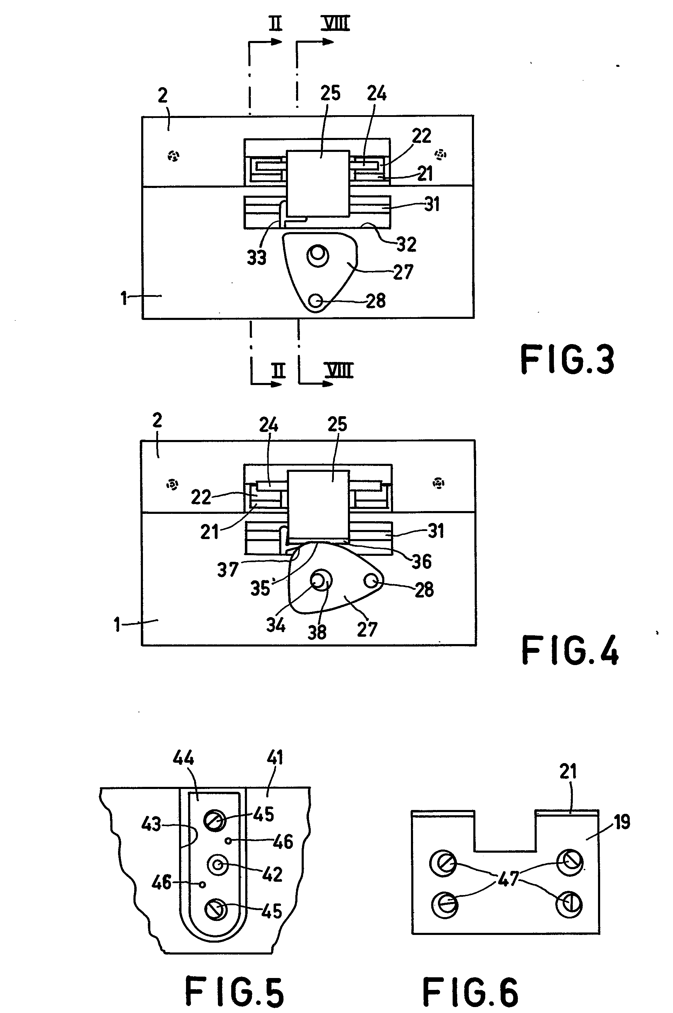

La figure 2 illustre la mise en place du magasin contre le corps de la caméra. Cette mise en place se fait à l'aide d'une seule main qui saisit le magasin par sa face supérieure en pinçant ses bords latéraux. Afin de faciliter le guidage latéral, il est avantageux que l'ouverture 7 (figure 1b) soit pratiquée dans une partie en creux (respectivement en relief) de forme sensiblement tronconique de la face avant 9 du magasin, cette partie coopérant avec une forme en relief (respectivement en creux) identique pratiquée en regard dans le corps de la caméra à l'emplacement de l'ouverture 6. De telles parties en creux ou en relief ne sont pas représentées aux dessins. Un tel pré-positionnement latéral peut être complété par le fait que les pieds de centrage 13 et 14 ainsi que les alésages 11 et 12 ont une forme cylindrique et que leurs extrémités situées en regard ont des formes coniques. Cette dernière caractéristique technique permet aussi un débattement dans le sens vertical du fait que l'introduction du magasin a lieu légèrement en oblique comme illustré à la figure 2. La chape supportant le verrou est articulée autour de l'axe 31 à l'intérieur du logement 32. Elle est soumise à l'action d'un ressort 33 qui tend à la repousser vers le haut. La position indiquée à la figure 2, le magasin ayant les deux arêtes principales de sa face avant au contact du corps, les pieds de centrage étant partiellement engagés dans les alésages et le verrou étant au contact du chanfrein d'introduction, est stable, c'est-à-dire que le magasin demeure dans cette position sous l'effet de son propre poids. Pour achever la mise en place, il suffit d'exercer une légère pression contre la face supérieure du magasin. La chape 25 pivote alors autour de l'axe 31 et le verrou 24 passe du chanfrein d'introduction 21 au chanfrein de blocage 22 sans jamais perdre le contact avec ces derniers pendant ce mouvement. Le chanfrein d'introduction présente une inclinaison de l'ordre de 30 degrés par rapport au plan de la plaquette d'appui. La fin de ce mouvement est illustrée à la figure 3. Dans cette dernière position qui est la position de verrouillage, les faces avant et inférieure du magasin sont au contact du corps, les pieds de centrage sont enfoncés à fond dans les alésages et le verrou 24 exerce une légère pression contre le chanfrein de blocage sous l'action du ressort 33. Il est alors possible de renverser l'ensemble corps-magasin sans que le magasin ne se détache du corps. Cependant, la force de cohésion, tarée à l'aide du ressort 33 reste modérée et permet la réversibilité du mouvement décrit ci-dessus, c'est-à-dire qu'en prenant le magasin par ses faces latérales et en exerçant sur lui une traction modérée, on peut le désolidariser du corps, la chape pivotant légèrement vers le bas autour de son axe, ce qui constitue un mode d'extraction possible. Le levier de déverrouillage 26 n'est donc pas indispensable et n'est d'ailleurs pas représenté aux figures 3 et 4.

Le passage de la position de verrouillage de la figure 3 à la position de verrouillage de sécurité est représenté à la figure 4. Sur la figure 4 la came 27 a été pivotée d'un quart de tour dans le sens direct autour de son axe 34 à l'aide du bouton de manoeuvre 28, de façon qu'elle appuie fortement à l'aide d'un méplat 35 contre la face inférieure 36 de la chape 25. Ce méplat est pratiqué dans la came de façon telle qu'une droite verticale perpendiculaire à l'axe 34 et traversant la came, sur la figure 4, passe sensiblement par son centre. Sous l'effet de la force exercée progressivement par la courbure 37 jusqu'à atteindre la valeur maximum dans la position représentée sur la figure 4, la chape et le verrou subissent un léger mouvement vers le haut, ce mouvement étant contrecarré par le contact à pression de plus en plus forte du verrou 24 contre le chanfrein 22. Ce mouvement n'est d'ailleurs possible que grâce à l'élasticité propre des pièces 24, 25 et 31. Le vecteur force d'intensité beaucoup plus élevée que précédemment et qui s'exerce alors contre le chanfrein 22, s'écarte du plan sensiblement horizontal passant par les trois points de fixation, en direction du corps de la caméra, c'est-à-dire vers le bas. La direction de ce vecteur force dépend de l'inclinaison donnée au chanfrein 22. Cette inclinaison est de l'ordre de 15 degrés par rapport à la verticale. Les éléments 25 et 27 et plus généralement les éléments constituant le dispositif 23 sont de préférence en acier inoxydable ou par exemple en acier 30NC11. De plus les surfaces des éléments 25 et 27 destinées à coopérer, notamment les parties 35, 36 et 37 sont rectifiées pour mieux résister à l'usure. Il peut se faire cependant qu'au bout d'un grand nombre de manipulations, l'usure soit telle que le verrou 24 n'appuie plus suffisamment contre le chanfrein 22. Dans ces conditions, il est possible qu'une variation d'accélération brutale de l'ordre de 10 g comparable à un choc, provoque un mouvement relatif entre le magasin et le corps. Afin de rétablir de manière simple la pression initiale nécessaire du magasin contre le corps, on peut prévoir de monter la came 27 sur son axe 34 par l'intermédiaire d'un excentrique 38 (figure 4). Le déplacement en rotation, pour réglage, de l'excentrique par rapport à la came et à l'axe s'opère de façon connue et permet ainsi de rattraper la course perdue par usure, du verrou 24 contre le chanfrein 22, lors du verrouillage de sécurité.

Le déplacement maximal toléré entre le film et l'optique de la caméra est de 0,08 mm afin de conserver une image nette. Cette fixité relative est facilement obtenue lorsque le magasin fait partie intégrante de la caméra. Lorsque le magasin est séparable comme c'est le cas ici, on s'impose un déplacement maximal possible entre corps et magasin de 0,03 mm et l'expérience montre que ce déplacement est suffisamment faible pour que la fixité définie ci-dessus soit conservée. La précision de 0,03 mm entraîne une précision assez grande pour l'emplacement relatif des pieds de centrage et des alésages, pour leurs diamètres respectifs ainsi que pour la mise en place de la plaquette d'appui. De préférence, les cinq éléments en question sont usinés séparément dans trois buts : tout d'abord l'enveloppe externe du corps et celle du magasin étant normalement réalisées en aluminium c'est-à-dire un matériau de faible résistance mécanique, il est préférable de réaliser les pièces de fixation en un matériau plus dur, de préférence en acier inox ou 30NC11, difficilement matable. D'autre part, ceci permet un positionnement de ces éléments en deux temps comme décrit en référence aux figures 5 et 6,

8 0015630

à savoir une présentation entre elles des pièces simplement vissées jusqu'à obtenir la position optimale puis fixation définitive notamment à l'aide de goujons enfoncés à force. En troisième lieu le remplacement de ces pièces après usure est économique et facile à réaliser.

A la figure 5 on a représenté une partie arrachée de la face avant du magasin ou bien la partie correspondante du corps, comportant un pied de centrage ou un alésage. En conséquence la référence 41 désigne indifféremment la référence 5 ou 9 et la référence 42 l'une des références 11, 12, 13 ou 14. Dans la paroi en aluminium 41 est prévu un logement 43 pour une barrette de positionnement 44 en acier qui affleure à la surface de la paroi 41 après vissage dans cette dernière à l'aide de deux vis 45. Un léger jeu de la barrette autour des vis est prévu. L'usinage des deux logements tels que 43, par exemple dans le corps de la caméra est effectué avec une cote d'entraxe définie avec une précision de l'ordre de 0,05 mm. Les barrettes portant par exemple les pieds de centrage sont ensuite vissées au milieu de ces logements et piétées à l'aide de goujons tels que 46 enfoncés à force à travers la barrette et la paroi 41 sous jacente. Deux logements sont aussi usinés dans la paroi arrière du magasin à la même cote d'entraxe et avec la même précision, puis on utilise un calibre pour placer les alésages portés par les barrettes liées au magasin au même écartement que les pieds de centrage et après obtention du bon écartement et vissage définitif on pratique un contre perçage et une fixation par goujons emmanchés durs à la presse comme précédemment. Cette façon d'opérer permet d'avoir des tolérances très faibles entre les diamètres des trous et des pieds de positionnement. Ces tolérances sont par exemple comprises entre 8 $\mu$ et 12 $\mu$. Un jeu très faible est souhaitable pour limiter l'effet de matage entre les pièces en cas de choc. Cependant un léger jeu est toujours nécessaire pour permettre l'introduction et l'extraction légèrement en biais du magasin par rapport au corps. Pour réduire ce dernier effet nuisible et dans la mesure ou des tolérances très faibles peuvent être obtenues, les alésages sont placés plus près de la face inférieure du magasin que de sa face supérieure, ce qui garantit un meilleur alignement dans le sens longitudinal lors de l'introduction. La longueur et le diamètre des pieds de centrage et des alésages sont de l'ordre de 1 à 2 mm. Ils sont liés à la force des chocs à transmettre et dépendent aussi des tolérances réalisées entre pieds de centrage et alésages.

La plaquette d'appui peut être mise en place comme décrit ci-dessus relativement aux barrettes portant les alésages. En effet, un ajustement par rapport au mouvement du verrou doit être prévu. Il est aussi possible de fixer la plaquette d'appui dans son logement comme représenté à la figure 6 par exemple à l'aide de quatre vis 47 bloquées de façon connue par de la loctite après mise en place optimale.

Lorsque l'une des cinq pièces de fixation doit être remplacée, la nouvelle pièce est prévue sans les perçages destinés aux goujons. Son perçage se fait à travers les orifices existant déjà dans la paroi en aluminium du magasin ou du corps après mise en place optimale. En pratique les axes supportant respectivement la chape 25 et la came 27, sont solidaires d'une pièce support usinée à cet effet, cette pièce, non représentée pour la simplification des dessins, étant fixée au corps de façon connue.

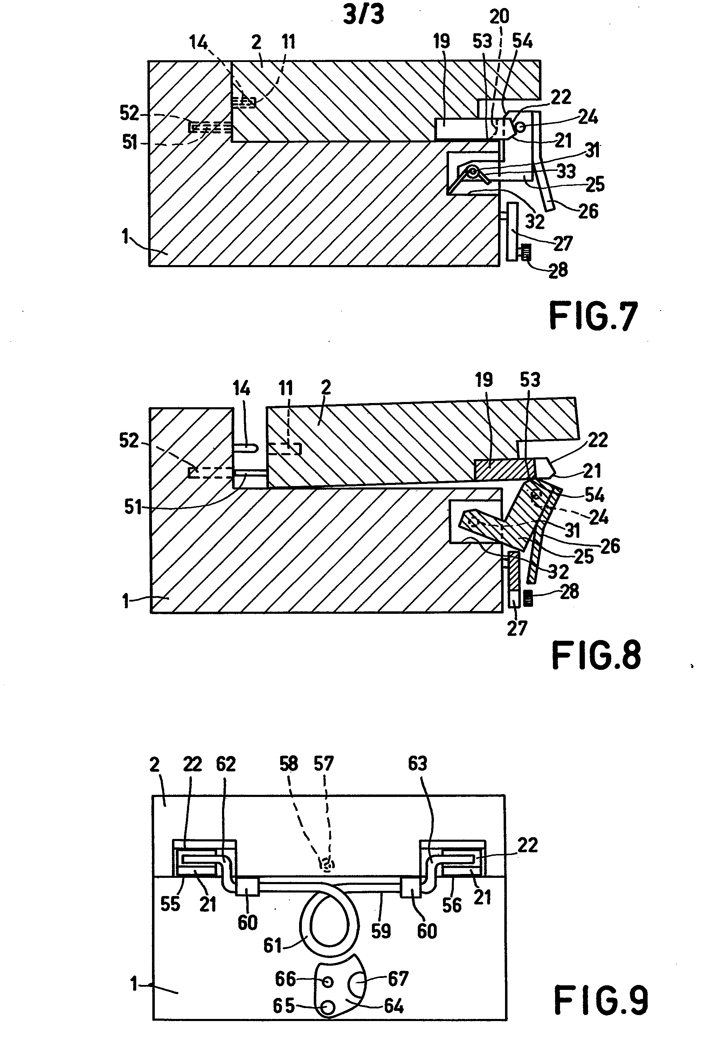

Les figures 7 et 8 illustrent un perfectionnement au mode de réalisation décrit ci-dessus, permettant l'éjection automatique du magasin.

La figure 7 est une vue du magasin verrouillé contre le corps, selon la coupe II-II de la figure 3. Le corps comporte en outre deux doigts d'éjection 51 soumis à un mouvement de piston grâce à l'action de ressorts non représentés qui tendent à les repousser d'un logement 52. Sous la pression de la face arrière du magasin, ces deux doigts, situés à proximité des bords latéraux, pénètrent entièrement à l'intérieur de leurs logements. La plaquette d'appui comporte un chanfrein supplémentaire 53 au niveau de l'échancrure 20, qui coopère avec un chanfrein 54 pratiqué dans une arête supérieure de la chape 25. La géométrie des différentes pièces est telle que lorsqu'on appuie sur le levier de déverrouillage 26 en partant de la position indiquée à la figure 7, le magasin libéré du verrou 24 est repoussé par les doigts 51, à la suite de quoi le chanfrein 53 rencontre le chanfrein 54 occupant la position en butée indiquée à la figure 8, la face arrière du magasin est ainsi repoussée vers le haut, et le magasin s'immobilise dans la position indiquée à la figure 8, lorsque les doigts d'éjection 51 arrivent en bout de course. Si, partant de la position de la figure 8 on supprime la pression sur le levier 26, la chape remonte sous l'action du ressort 33 et le chanfrein 54 continue de glisser contre le chanfrein 53 de façon à faire pivoter vers le haut le magasin, autour d'un axe géométrique

0015630

passant très près de l'extrémité des doigts 51. Dans la position de repos finale obtenue, non représentée, le pilote peut aisément saisir d'une main le magasin ainsi libéré. L'introduction du magasin vierge a toujours lieu comme décrit en référence à la figure 2, à la petite différence près que la position indiquée à la figure 2 s'obtient, dans ce dernier cas, moyennant une légère pression contre le magasin, pour compenser l'action des doigts 51.

La figure 9 illustre, en position de verrouillage, un deuxième mode de réalisation de l'invention. A la plaquette d'appui 19 qui, dans le premier mode de réalisation est assimilable à un point de fixation unique, sont substituées deux plaquettes d'appui 55 et 56, fixées à l'aide de vis et de goujons dans la paroi inférieure du magasin, à proximité des bords latéraux, et un seul pied de centrage 57 coopère avec un seul alésage 58 sensiblement au milieu de la face avant du magasin. Le verrou est constitué par une tige 59, de préférence en acier dur, supportée à rotation par deux paliers 60 solidaires du corps de la caméra. La tige 59 comporte en son milieu une boucle 61 faisant office de levier et à ses extrémités deux manivelles 62 et 63 qui saillent à l'extérieur du corps et qui sont destinées à transmettre aux extrémités de la tige 59 constituant les verrous proprement dits, les couples exercés sur ladite tige. Un premier couple de verrouillage modéré est exercé sur la tige par un ou deux ressorts non représentés, solidaires du corps, et un deuxième couple, beaucoup plus élevé, est exercé par une came de verrouillage de sécurité 64 actionnée par un bouton de manoeuvre 65 autour d'un axe 66. La came 64 comporte un bossage qui se termine par un méplat 67. Sa surface est rectifiée et lorsqu'elle est pivotée d'un quart de tour elle s'engage sous la boucle 61 et, en fin de course, le méplat 67 appuie fortement contre l'extrémité inférieure de la boucle, selon un vecteur force dirigé vers l'arrière. Le couple assez élevé qui en résulte sur la tige est transmis aux extrémités faisant office de verrous de la tige par l'intermédiaire des manivelles 62 et 63 de façon à assurer le verrouillage de sécurité. Une rondelle d'écartement sur l'axe 66 peut être prévue pour rattraper le jeu après usure. Ce deuxième mode de réalisation présente l'avantage d'être encore plus simple que le premier, étant donné le nombre réduit de pièces nécessaires pour le verrouillage, ces pièces étant par ailleurs d'un façonnage facile.

REVENDICATIONS :

1.        Mécanisme de verrouillage de sécurité pour magasin de caméra, notamment une caméra disposée dans le poste de pilotage d'un aéronef pouvant être soumis à des accélérations de l'ordre de 10 g, ledit magasin étant séparable du corps de la caméra, caractérisé en ce qu'il permet de façon simple le remplacement en cours de vol par le pilote d'un magasin utilisé par un magasin vierge et comporte à cet effet trois points de fixation dudit magasin audit corps dont au moins un premier, d'un premier type, est constitué par l'association d'un pied de centrage et d'un alésage précis et au moins un second, d'un deuxième type, est constitué par un verrou articulé sur ledit corps, qui travaille contre l'action d'un premier ressort et coopère avec deux chanfreins juxtaposés disposés extérieurement dans la paroi externe dudit magasin, à savoir un chanfrein d'introduction et un chanfrein de blocage, une came solidaire dudit corps servant, après mise en place du magasin, à faire appuyer à force ledit verrou contre ledit chanfrein de blocage selon un vecteur force qui s'écarte du plan passant par les trois points de fixation en direction du corps de la caméra, de façon à réaliser ledit verrouillage de sécurité.

2.        Mécanisme de verrouillage de sécurité selon la revendication 1 pour magasin ayant une forme de parallélépipède rectangle et s'appliquant contre ladite caméra par une face inférieure et une face avant, caractérisé en ce que ladite face avant est solidarisée audit corps au moyen de deux points de fixation dudit premier type et que la face inférieure est solidarisée audit corps au moyen d'un point de fixation dudit deuxième type.

3.        Mécanisme de verrouillage de sécurité selon la revendication 1 ou 2, caractérisé en ce qu'il comporte en outre un levier de déverrouillage solidaire dudit verrou et un mécanisme d'éjection dudit magasin constitué par deux doigts escamotables travaillant contre l'action de deuxièmes ressorts pour repousser ladite face avant dudit magasin et destinés à coopérer dans leur mouvement avec des chanfreins d'éjection pratiqués respectivement dans la face inférieure du magasin et sur une pièce solidaire dudit verrou.

4.        Mécanisme de verrouillage de sécurité selon l'une des revendications 1 à 3, caractérisé en ce que ladite came de verrouillage de sécurité est actionnée par un mouvement quart-de-tour, son profil étant constitué par deux méplats situés dans des plans sensiblement orthogonaux et réunis par une surface courbe, les surfaces de ladite pièce solidaire du verrou et de la came destinées à entrer en contact étant rectifiées.

5. Mécanisme de verrouillage de sécurité selon la revendication 4, caractérisé en ce que ladite came pivote autour d'un axe solidaire du corps par l'intermédiaire d'un excentrique réglable.

6. Mécanisme de verrouillage de sécurité selon la revendication 1 pour magasin ayant une forme de parallélépipède rectangle et
s'appliquant contre ladite caméra par une face inférieure et une face
avant, caractérisé en ce que ladite face avant est solidarisée audit
corps au moyen d'un point de fixation dudit premier type et que la face
inférieure est solidarisée audit corps au moyen de deux points de fixation dudit deuxième type.

7. Mécanisme de verrouillage de sécurité selon l'une des revendications 1 à 6, caractérisé en ce qu'une partie en creux de forme
sensiblement tronconique pratiquée dans la face avant dudit magasin coopère avec une forme en relief identique pratiquée dans le corps de la
caméra de manière à établir un pré-centrage lors de l'introduction dudit
magasin dans ledit corps.

8. Mécanisme de verrouillage de sécurité selon l'une des revendications 1 à 7, caractérisé en ce que ledit pied de centrage et ledit alésage précis ont une forme cylindrique et que leurs extrémités situées en regard ont des formes coniques destinées à coopérer lors de
l'introduction du magasin dans le corps de la caméra.

9. Mécanisme de verrouillage de sécurité selon l'une des revendications 1 à 8, caractérisé en ce que ledit aéronef est un avion de
chasse et que ladite caméra est un enregistreur de visée utilisé notamment pendant le tir des armes.

10. Caméra et/ou magasin destinés à recevoir un mécanisme de
verrouillage de sécurité selon l'une quelconque des revendications précédentes.

0015630

FIG.1b

FIG.1a

FIG.2

0015630

FIG.3

FIG.4

FIG.5

FIG.6

2-Ⅲ-PHF  79-514

FIG.7

FIG.8

FIG.9

## DOCUMENTS CONSIDERES COMME PERTINENTS

| Catégorie | Citation du document avec indication, en cas de besoin, des parties pertinentes | Revendication concernée |
|---|---|---|
| | US - A - 3 637 298 (E.M. WHITLEY)<br>* Colonne 6, lignes 65-75; colonne 7; figures 1-4 * | 1-3,8 |
| D | FR - A - 2 269 844 (SOCIETE AIR OCEAN)<br>* Page 2, lignes 21-29; pages 3-5; figures 1-20 * | 1,6 |
| | FR - A - 2 391 487 (G. GRESSET)<br>* Page 1, lignes 24-40; pages 2, 3; figures 1-7 * | 1,6 |
| A | FR - A - 1 397 048 (I.G. HASTH)<br>* Page 2, colonne 2, lignes 49-58; page 3, colonnes 1,2, lignes 1-20; figures 1-4 * | 1 |
| A | FR - A - 1 318 120 (Mme. FLODELL)<br>* Page 2, colonnes 1,2; figures 1-7 * | 1 |
| A | FR - A - 615 794 (SOC. BRACHET)<br>* Page 1, lignes 1-48; figure 1 * | |

**CLASSEMENT DE LA DEMANDE (Int. Cl. 3)**

G 03 B 17/26

**DOMAINES TECHNIQUES RECHERCHES (Int. Cl. 3)**

G 03 B 17/26
17/28
17/32
19/18
E 05 C 19/02
G 03 B 19/08
19/20

**CATEGORIE DES DOCUMENTS CITES**

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons
&: membre de la même famille, document correspondant

Le présent rapport de recherche a été établi pour toutes les revendications

| Lieu de la recherche | Date d'achevement de la recherche | Examinateur |
|---|---|---|
| La Haye | 21-04-1980 | BOEYKENS |

OEB Form 1503.1   06.78